# EUROPÄISCHE PATENTANMELDUNG

(11) **EP 1 344 686 A2**
(43) Veröffentlichungstag der Anmeldung: **17.09.2003**
(21) Anmeldenummer: 03004408.5
(22) Anmeldetag: 27.02.2003
(51) Int. Cl.: B60R 1/04, B60R 1/06

(54) **Rückspiegel für Fahrzeuge**

(30) Priorität: 07.03.2002 DE 10210894
(71) Anmelder: Valeo Schalter und Sensoren GmbH, 74321 Bietigheim-Bissingen (DE)
(72) Erfinder: Rath, Joachim, 71563 Siegelhausen (DE)
(74) Vertreter: Dreiss, Fuhlendorf, Steimle & Becker

(57) **Zusammenfassung**

Die Erfindung betrifft einen Rückspiegel eines Fahrzeugs, insbesondere eines Kraftfahrzeugs, mit mindestens einem Spiegelabschnitt, der mittels mindestens einer mit dem Spiegelabschnitt zusammenwirkenden Verstellvorrichtung bewegbar und/oder verformbar ist, und mit mindestens einer Vorrichtung zur Erfassung von Zustandsdaten des Fahrzeugs und/oder der Fahrbahn, wobei eine Steuereinheit vorgesehen ist, die in Abhängigkeit der Zustandsdaten die Verstellvorrichtung zur Bewegung und/oder Verformung des Spiegelabschnitts ansteuert.

## Beschreibung

Die Erfindung betrifft einen Rückspiegel eines Fahrzeugs, insbesondere eines Kraftfahrzeugs, mit mindestens einem Spiegelabschnitt, der mittels mindestens einer mit dem Spiegelabschnitt zusammenwirkenden Verstellvorrichtung bewegbar und/oder verformbar ist, und mit mindestens einer Vorrichtung zur Erfassung von Zustandsdaten des Fahrzeugs und/oder der Fahrbahn.

Für Rückspiegel, d.h. für Außen- oder Innenspiegel eines Fahrzeugs, sind verschiedene Komfortfunktionen bekannt. Beispielsweise sind die Spiegel elektrisch einstellbar. Die Einstellung der Spiegel erfolgt üblicherweise über im Innenraum des Fahrzeugs angeordnete Betätigungselemente, die einen elektrischen Antrieb ansteuern, der eine Spiegelfläche in einem Gehäuse bewegt. Es ist außerdem bekannt, den rechten Außenspiegel bei Rückwärtsfahrt derart zu verschwenken, dass Gegenstände in der Nähe der Aufstandsfläche des Fahrzeugs, also z.B. Bordsteine, für den Fahrer sichtbar werden.

Die Aufgabe der vorliegenden Erfindung ist es, die Verstellung der Spiegel dahingehend zu automatisieren, dass weitere Komfortmerkmale realisiert werden können.

Diese Aufgabe wird bei einem Rückspiegel der eingangs beschriebenen Art erfindungsgemäß dadurch gelöst, dass eine Steuereinheit vorgesehen ist, die in Abhängigkeit der Zustandsdaten des Fahrzeugs und/oder der Fahrbahn die Verstellvorrichtung zur Bewegung und/oder Verformung des Spiegelabschnitts ansteuert.

Der Spiegelabschnitt ist beispielsweise im Gehäuse eines Außenspiegels an einem Fahrzeug befestigt. Der Spiegelabschnitt kann nicht nur, wie bereits bekannt, über geeignete Betätigungselemente vom Innenraum des Fahrzeugs angesteuert werden, sondern auch von einer Steuereinheit, die mit der Verstellvorrichtung zur Bewegung und/oder Verformung des Spiegelabschnitts in Verbindung steht. Die Steuereinheit benötigt zur Ansteuerung der Verstellvorrichtung Zustandsdaten des Fahrzeugs und/oder der Fahrbahn. Durch die Erfassung dieser Zustandsdaten kann beispielsweise ermittelt werden, dass sich das Fahrzeug in Kurvenfahrt befindet, was es erforderlich machen kann, den für den Fahrer in den Rückspiegeln sichtbaren Bereich gegenüber einer Fahrsituation bei Geradeausfahrt zu verändern. Eine solche Veränderung kann beispielsweise darin bestehen, dass der Außenspiegel, der dem Kurvenmittelpunkt zugewandt ist, um eine im Wesentlichen vertikale Achse nach außen gedreht wird, um für den Fahrer auch einen Bereich sichtbar zu machen, der beispielsweise im Kurveneingang liegt. Dieser Bereich ist bei herkömmlich angesteuerten Rückspiegeln von Fahrzeugen für den Fahrer nur sichtbar, indem er entweder die Lage der Spiegelabschnitte relativ zum Fahrzeug verstellt, oder indem er seine Relativlage zum Rückspiegel ändert.

Um die Verstellung der Spiegel zu automatisieren, ist vorgesehen, dass die Ansteuerung der Spiegelabschnitte bzw. der mit den Spiegelabschnitten zusammenwirkenden Verstellvorrichtungen nicht manuell über Betätigungselemente, sondern über die Steuereinheit erfolgt, die dann anstelle des Fahrers aufgrund der Zustandsdaten des Fahrzeugs und/oder der Fahrbahn eine Verstellung der Spiegelabschnitte bewirkt.

Die Spiegelabschnitte können auch mehrfach vorgesehen sein, beispielsweise bei Anordnung von mehreren Spiegelflächen in einem Spiegelgehäuse. Es ist auch denkbar, die Spiegelabschnitte durch spiegelnde Flächen auszubilden, die in sich verformbar sind, wodurch der für den Betrachter aus einer bestimmten Lage sichtbare Bereich veränderbar ist.

Vorteilhafterweise weist die Verstellvorrichtung für den oder die Spiegelabschnitte einen elektrischen Antrieb auf. Elektrische Antriebe für Verstellvorrichtungen von Spiegeln sind heutzutage bereits in Fahrzeugen der Kompaktklasse üblicherweise verbaut, so dass diese verwendet werden können, ohne dass Zusatzelemente erforderlich sind. Die elektrischen Antriebe sind üblicherweise als Elektromotoren ausgebildet, die über eine Übertragungsmechanik, beispielsweise über verzahnenden Eingriff, mit Elementen auf der Rückseite des Spiegelabschnitts eine Bewegung desselben bewirken.

Nach einer ersten Ausführungsform weist die Vorrichtung zur Erfassung von Zustandsdaten des Fahrzeugs und/oder der Fahrbahn einen Lenkwinkelsensor auf. Derartige Sensoren werden ebenfalls bereits für eine Vielzahl von Fahrzeugen eingesetzt, beispielsweise um Eingangsinformationen für Fahrdynamiksysteme zu liefern. Dieser Lenkwinkelsensor kann erfindungsgemäß dafür verwendet werden, dass der Lenkwinkel des Fahrzeugs erfassbar ist, wodurch bestimmt werden kann, dass sich das Fahrzeug in Kurvenfahrt befindet. In Abhängigkeit des Lenkwinkels kann dann über die Steuereinheit eine Ansteuerung der Verstellvorrichtung zur Bewegung und/oder Verformung der Spiegelabschnitte erfolgen. Durch den Lenkwinkelsensor kann entweder die Stellung des Lenkrads des Fahrzeugs oder der Winkel zwischen der Laufrichtung der gelenkten Räder und der Längsrichtung des Fahrzeugs ermittelt werden. Zur Umwandlung der durch den Lenkwinkelsensor gewonnenen Eingangsinformationen in geeignete Verstell- und/oder Verformbewegungen des Spiegelabschnitts oder der Spiegelabschnitte können in der Steuereinheit geeignete Kennlinien abgelegt sein.

Eine Weiterbildung der Erfindung sieht vor, dass diese Kennlinien vom Fahrer durch geeignete Eingabemittel individuell einstellbar sind.

Nach einer weiteren Ausführungsform der Erfindung ist vorgesehen, dass die Vorrichtung zur Erfassung von Zustandsdaten des Fahrzeugs und/oder der Fahrbahn optische Sensoren zur Erfassung des Fahrbahnverlaufs aufweist. Durch diese Sensoren können, ggf. im Zusammenspiel mit einem Lenkwinkelsensor, der tatsächliche Fahrbahnverlauf ermittelt werden, beispielsweise durch Erfassung von am Fahrbahnrand befindlichen Markierungen. Somit kann eine Verstellung des oder der Spiegelabschnitte nicht nur in Abhängigkeit vom Lenkwinkel des Fahrzeugs, sondern zusätzlich oder ausschließlich durch die Erfassung des Fahrbahnverlaufs erfolgen.

Nach einer Ausführungsform der Erfindung umfassen die optischen Sensoren eine Videokamera, die beispielsweise über Kopplung an geeignete Auswertemittel Zustandsdaten zum Fahrbahnverlauf erzeugt, die nach Weiterleitung an die Steuereinheit dazu dienen, die Verstellvorrichtung oder die Verstellvorrichtungen für den oder die Spiegelabschnitte entsprechend anzusteuern.

Nach einer weiteren Ausführungsform ist vorgesehen, dass die Vorrichtung zur Erfassung von Zustandsdaten des Fahrzeugs und/oder der Fahrbahn ein Navigationssystem zur Bestimmung der Fahrzeugposition und/oder des Fahrbahnverlaufs aufweist. Durch ein solches System, dass ebenfalls bereits in vielen Fahrzeugen eingebaut ist, kann beispielsweise über Satelliten-Navigation die aktuelle Fahrzeugposition ermittelt werden und mit im Navigationssystem abgelegten Straßenkarten abgeglichen werden, wobei die Straßenkarten derartig aufgelöst sind, dass auch Kurvenverläufe mit einer großen Genauigkeit erfasst sind.

In Weiterbildung der Erfindung ist vorgesehen, dass mit Hilfe eines solchen Navigationssystems auch eine Fahrzeugposition bestimmbar ist, in der das Fahrzeug einen Rangierzustand einnimmt, beispielsweise bei Ortung des Fahrzeugs auf einem Parkstreifen oder in einem Parkhaus. Auch diese Informationen können an die Steuereinheit weitergegeben werden und dort über geeignete Kennlinien oder Kennfelder für die Ansteuerung der Verstellvorrichtung für die Bewegung und/oder Verformung der Spiegelabschnitte verwendet werden.

Es erweist sich als vorteilhaft, dass zur Erfassung mindestens eines Lagezustands des Spiegelabschnitts mindestens ein Lagesensor vorgesehen ist, wobei der Lagesensor mit der Steuereinheit in Verbindung steht und die Steuereinheit die Verstellvorrichtung in Abhängigkeit des Lagezustands ansteuert. Durch die Erfassung des tatsächlichen Lagezustands des Spiegelabschnitts ist gewährleistet, dass auch nach unerwünschter Verstellung der Spiegelabschnitte, beispielsweise durch spielende Kinder oder durch Einwirken von Bürsten einer Autowaschanlage, eine Ansteuerung der Spiegelabschnitte unter Berücksichtigung einer Referenzlage erfolgen kann. Der Spiegelabschnitt kann ausgehend von dieser Referenzlage durch entsprechende Ansteuerung des elektrischen Antriebs, beispielsweise eines Schrittmotors in die von der Steuereinheit vorgegebene Lage gebracht werden. Es ist möglich, die Verstellvorrichtung bei Fahrtantritt so lange anzusteuern, bis der Lagesensor eine Referenzlage des Spiegelabschnitts erfasst. Beispielsweise kann der Spiegelabschnitt hierzu aus seiner aktuellen Lage in eine Extremlage verschwenkt werden und aus dieser ersten Extremlage in eine zweite Extremlage verschwenkt werden, bis der Lagesensor die Referenzlage des Spiegelabschnitts erfasst hat. Eine solche Referenzlage kann beispielsweise durch einen Kontaktschalter oder einen Hallsensor erfasst werden. Die Verwendung eines Hallsensors hat den Vorteil, dass die Erfassung der Referenzlage des Spiegelabschnitts berührungsfrei erfolgen kann.

Eine Variante der Erfindung sieht vor, dass die Vorrichtung zur Erfassung von Zustandsdaten des Fahrzeugs einen Geschwindigkeitsmesser aufweist. Auf diese Weise kann die Verstellung des Spiegelabschnitts zusätzlich noch von der Geschwindigkeit des Fahrzeugs abhängen. So wird der Spiegelabschnitt bei gleichem Lenkeinschlag und geringer Geschwindigkeit weiter verstellt, als bei höherer Geschwindigkeit. Dies dient dem besseren Überblick z.B. beim Einparken und/oder rückwärts fahren.

## Patentansprüche

1. Rückspiegel eines Fahrzeugs, insbesondere eines Kraftfahrzeugs, mit mindestens einem Spiegelabschnitt, der mittels mindestens einer mit dem Spiegelabschnitt zusammenwirkenden Verstellvorrichtung bewegbar und/oder verformbar ist, und mit mindestens einer Vorrichtung zur Erfassung von Zustandsdaten des Fahrzeugs und/oder der Fahrbahn, **dadurch gekennzeichnet, dass** eine Steuereinheit vorgesehen ist, die in Abhängigkeit der Zustandsdaten die Verstellvorrichtung zur Bewegung und/oder Verformung des Spiegelabschnitts ansteuert.

2. Rückspiegel nach Anspruch 1, **dadurch gekennzeichnet, dass** die Verstellvorrichtung einen elektrischen Antrieb aufweist.

3. Rückspiegel nach einem der vorhergehenden Ansprüche, **dadurch gekennzeichnet, dass** die Vorrichtung zur Erfassung von Zustandsdaten des Fahrzeugs und/oder der Fahrbahn einen Lenkwinkelsensor aufweist.

4. Rückspiegel nach einem der vorhergehenden Ansprüche, **dadurch gekennzeichnet, dass** die Vorrichtung zur Erfassung von Zustandsdaten des Fahrzeugs und/oder der Fahrbahn optische Sensoren zur Erfassung des Fahrbahnverlaufs aufweist.

5. Rückspiegel nach Anspruch 4, **dadurch gekennzeichnet, dass** die optischen Sensoren eine Videokamera umfassen.

6. Rückspiegel nach einem der vorhergehenden Ansprüche, **dadurch gekennzeichnet, dass** die Vorrichtung zur Erfassung von Zustandsdaten des Fahrzeugs und/oder der Fahrbahn ein Navigationssystem zur Bestimmung der Fahrzeugposition und/oder des Fahrbahnverlaufs aufweist.

7. Rückspiegel nach einem der vorhergehenden Ansprüche, **dadurch gekennzeichnet, dass** zur Erfassung mindestens eines Lagezustands des Spiegelabschnitts mindestens ein Lagesensor vorgesehen ist, wobei der Lagesensor mit der Steuereinheit in Verbindung steht und die Steuereinheit die Verstellvorrichtung in Abhängigkeit des Lagezustands ansteuert.

8. Rückspiegel nach Anspruch 7, **dadurch gekennzeichnet, dass** der Lagesensor durch einen Kontaktschalter gebildet ist.

9. Rückspiegel nach Anspruch 7, **dadurch gekennzeichnet, dass** der Lagesensor durch einen Hallsensor gebildet ist.

10. Rückspiegel nach einem der vorhergehenden Ansprüche, **dadurch gekennzeichnet, dass** die Vorrichtung zur Erfassung von Zustandsdaten des Fahrzeugs einen Geschwindigkeitsmesser aufweist.
